# EUROPEAN PATENT APPLICATION

(11) **EP 4 693 021 A1**
(43) Date of publication of application: **11.02.2026**
(21) Application number: 25192020.3
(22) Date of filing: 26.07.2025
(51) Int. Cl.: G06F 8/30, G06F 8/36, G06F 9/54

(54) **SYSTEM AND METHOD FOR AUTO DISCOVERY OF APPLICATION PROGRAMMING INTERFACES (APIS)**

(30) Priority: 26.07.2024 US 202463675909 P
(71) Applicant: Shabodi Corp., Mississauga, ON L6Z 1S1 (CA)
(72) Inventor: Geekee, Hapreet, Oakville, L6H 4C3 (CA); Sood, Nitin, Mississauga, L5L 0B6 (CA); Jafarizadeh, Mehdi, Toronto, M5V 2J5 (CA)
(74) Representative: Bauer, Marcus

(57) **Abstract**

A system and method for automated discovery and transformation of application programming interfaces (APIs) receive descriptions of an ingress API and multiple egress APIs. A natural language processing (NLP) model computes similarity scores (0-1 range) for parameter pairs by comparing definitions. A similarity matrix is constructed from these scores. Pairs exceeding a threshold (e.g., ≥0.5) are selected, and a generative artificial intelligence (GenAI) model generates pseudo code defining transformation logic for data mapping, optionally with regular expressions. Low-score pairs enable manual processing. The system includes processors and a non-transitory storage medium for execution, with an API router for routing using the logic. This hybrid approach reduces manual effort, errors, and time in API integration, enhancing scalability for diverse environments.

## Description

### CROSS-REFERENCE TO RELATED APPLICATIONS

This application claims priority from U.S. Provisional Application Ser. No. 63/675,909, entitled "SYSTEM AND METHOD FOR AUTO DISCOVERY OF APPLICATION PROGRAMMING INTERFACES (APIs)", filed July 26, 2024, which is incorporated herein in its entirety.

### TECHNICAL FIELD

The present disclosure relates to Application Programming Interfaces (APIs), more particularly the present disclosure relates to a system and method for auto discovery of Application Programming Interfaces (APIs).

### BACKGROUND

The present disclosure relates generally to the field of application programming interfaces (APIs), and more particularly to systems and methods for managing API discovery and integration in complex networked environments.

In contemporary software ecosystems, APIs function as essential intermediaries that facilitate data exchange and functionality sharing across diverse applications and services. This is particularly evident in architectures involving an ingress API, which acts as an entry point for incoming requests, and multiple egress APIs, which handle outbound processing or routing to backend systems. As digital transformation accelerates, organizations deploy APIs in increasingly intricate setups, such as microservices-based applications, cloud-native platforms, and hybrid infrastructures, where seamless interoperability is paramount. However, the heterogeneity of API designs-ranging from RESTful interfaces to GraphQL or legacy SOAP protocols-complicates the task of ensuring consistent communication, especially when dealing with varied payload parameters that must align across ingress and egress endpoints.

A primary technical challenge arises from the manual processes traditionally required to configure API routers for effective discovery and integration. Developers must manually inspect API specifications, identify potential egress APIs that match the ingress requirements, and define rules for transforming payload parameters. For example, an ingress API might receive parameters like device identifiers, throughput values in specific units (e.g., Kbps or Mbps), or session durations, which need to be adapted for egress APIs expecting different formats, such as mobile country codes, aggregated bit rates, or expiry timestamps. This manual mapping is labor-intensive, demanding deep domain knowledge to avoid mismatches that could disrupt data flow or cause system failures.

Such manual interventions introduce significant delays, particularly in environments with limited resources or small teams. In fast-paced sectors like telecommunications, where APIs manage real-time data routing for network provisioning or session management, even minor configuration lags can impede service delivery. As the volume of APIs scales-often exceeding hundreds in enterprise settings-these delays compound, slowing down deployment cycles and hindering organizational agility. Moreover, the lack of standardized tools for handling API variability exacerbates this issue, forcing repeated manual reviews whenever API specifications evolve due to updates in business logic or regulatory requirements.

Error proneness represents another critical gap in existing API management practices. Manual transformations of payload parameters are susceptible to human oversight, such as failing to account for subtle differences in data schemas. For instance, an ingress parameter denoting a time duration in seconds might not directly correspond to an egress parameter for session expiry in datetime formats, leading to incorrect data conversions and downstream errors. These inconsistencies can manifest as runtime failures, data corruption, or incomplete transactions, increasing the risk of operational disruptions. In high-stakes applications, like financial services or healthcare systems, such errors not only affect efficiency but also pose compliance and security risks, as misconfigured APIs may inadvertently expose sensitive data or create vulnerabilities to attacks.

Scalability further underscores the limitations of current approaches. As API ecosystems expand to include diverse providers and consumers-spanning on-premises legacy systems, public clouds, and edge computing nodes-the complexity of managing one-to-many relationships between ingress and egress APIs grows exponentially. Traditional methods struggle to accommodate this growth, often resulting in fragmented integrations where parameters are inconsistently handled across multiple egress points. This fragmentation leads to resource strain, with teams dedicating disproportionate time to maintenance rather than innovation, ultimately raising operational costs and reducing system reliability.

Integration challenges in heterogeneous environments amplify these problems. APIs from different vendors or standards may employ incompatible data models, requiring custom adaptations that are difficult to automate with existing tools. For example, bridging an ingress API designed for consumer-facing applications with egress APIs optimized for backend analytics often involves reconciling disparate parameter definitions, such as converting enumerated units to numerical aggregates. Without robust mechanisms to address these disparities, systems experience bottlenecks, particularly in real-time scenarios where low-latency transformations are essential.

The dynamic nature of APIs adds another layer of complexity. Frequent updates to API specifications-driven by evolving business needs, security patches, or technological advancements-necessitate ongoing reconfiguration. Manual processes fail to keep pace, leading to outdated integrations that degrade performance over time. This is evident in industries like e-commerce or IoT, where APIs must adapt to fluctuating data volumes and formats, yet current methodologies lack the flexibility to handle such dynamism efficiently.

Security and compliance gaps also persist in manual API handling. Exposed parameters during transformations can become entry points for threats, such as injection attacks or data leaks, especially when configurations are not uniformly applied across ingress-egress pathways. Regulatory frameworks, including data protection standards like GDPR or HIPAA, demand precise control over parameter flows, but manual methods often fall short, increasing the likelihood of non-compliance and associated penalties.

Collectively, these technical problems highlight a significant gap in the art: the absence of efficient, scalable means to manage API discovery and parameter transformations without heavy reliance on manual expertise. Addressing this gap is crucial for enhancing system interoperability, reducing errors, and supporting the demands of modern, API-centric architectures. Accordingly, there exists a technical need for improved approaches to overcome these persistent limitations in API management.

### SUMMARY OF THE INVENTION

This Summary is provided to introduce a selection of concepts in a simplified form that are further described in the Detailed Description below. This Summary is not intended to identify key or essential features of the claimed subject matter, nor is it intended to be used as an aid in determining the scope of the claimed subject matter, which is set forth by the claims. Moreover, the techniques, systems, and computer-readable media disclosed herein may be implemented individually or in any operable combination, unless stated otherwise.

In one aspect, a computer-implemented method enables automated discovery and transformation of application programming interfaces (APIs) by receiving a description of an ingress API and descriptions of a plurality of egress APIs, followed by applying a natural language processing (NLP) model to compute a similarity score-typically in a numerical range of 0 to 1-for each of a plurality of parameter pairs, where each pair includes a payload parameter from the ingress API description and a payload parameter from one of the egress API descriptions, with scores determined by comparing parameter definitions. The method further involves constructing a similarity matrix, such as an N × M matrix where N represents the number of ingress payload parameters and M the total across egress APIs, from these scores; selecting parameter pairs with scores exceeding a predetermined threshold (e.g., greater than or equal to 0.5); and generating, using a generative artificial intelligence (GenAI) model, pseudo code for each selected pair that defines transformation logic to map data between the parameters. In some embodiments, the pseudo code is compiled into an executable one-liner expression or a regular expression and executed at runtime within an API router to transform payload data of the ingress API into payload data of at least one of the plurality of egress APIs. For pairs below the threshold, the method may enable manual processing to define transformation logic and can extend to real-time execution of the generated code for transforming payload data, including specific conversions like adapting a date format parameter from the ingress API to an expiry format in an egress API. By automating the creation of this transformation logic, the method significantly reduces manual development costs, accelerates deployment cycles for new services, and improves overall system reliability by minimizing human error.

In another aspect, a system for automated API discovery and transformation comprises one or more processors and a non-transitory computer-readable storage medium storing instructions that, when executed, cause the processors to receive ingress and egress API descriptions, apply an NLP model to compute similarity scores for parameter pairs by comparing definitions, construct an N × M similarity matrix from the scores, select pairs exceeding a threshold (e.g., ≥0.5) within a 0 to 1 range, and generate GenAI-based pseudo code defining transformation logic (e.g., one-liner conversions) or regular expressions for selected pairs, with fallback to manual processing for low-score pairs. The instructions may further compile the pseudo code into executable one-liner expressions or regular expressions and execute the compiled expressions at runtime within an API router to transform payload data. The system can store the matrix and pseudo code in a database for subsequent transformations and execute the pseudo code in real time for payload data mapping, such as converting date formats to expiry parameters, thereby facilitating hybrid automated-manual handling in dynamic API environments. This approach provides substantial business value by reducing operational costs, enabling faster time-to-market, and enhancing the robustness and security of API integrations in complex enterprise environments.

In yet another aspect, a non-transitory computer-readable storage medium stores instructions that, when executed by one or more processors, perform any of the operations described in the foregoing aspects, including compiling pseudo code into an executable one-liner or regular expression and executing the compiled expression at runtime within an API router.

The foregoing Summary is not intended to be exhaustive or to limit the disclosure to the precise forms disclosed. Numerous modifications and variations will be apparent to one of ordinary skill in the art in view of the teachings herein. References to "one embodiment," "an embodiment," or "some embodiments" mean that a particular feature, structure, or characteristic described in connection with the embodiment is included in at least one embodiment, and appearances of the phrase "in one embodiment" (or similar) are not necessarily all referring to the same embodiment. Unless explicitly stated otherwise, features described in connection with one aspect may be combined with the features of other aspects. The scope of the claimed subject matter is defined solely by the claims, as they may be amended during prosecution.

### BRIEF DESCRIPTION OF THE DRAWINGS

The following detailed description of the preferred embodiments of the present disclosure will be better understood when read in conjunction with the appended drawings. The present disclosure is illustrated by way of example, and not limited by the accompanying figures, in which like references indicate similar elements.
FIG. 1 is a block diagram that illustrates a system for auto discovery of Application Programming Interfaces (APIs), according to an embodiment of the present disclosure;
FIG. 2 is a block diagram that illustrates an information processing apparatus of the system of FIG. 1, according to an embodiment of the present disclosure;
FIG. 3 illustrates a table that depicts specifications of an ingress API call, according to an exemplary embodiment of the present disclosure;
FIG. 4 illustrates a table that depicts specifications of an egress API call, according to an exemplary embodiment of the present disclosure;
FIG. 5 illustrates a similarity matrix generated based on the specification of the ingress API call of FIG. 3 and the specifications of the egress API call of FIG. 4, according to an exemplary embodiment of the present disclosure;
FIG. 6 illustrates a flowchart of a method for auto discovery of APIs, according to embodiments of the present disclosure; and
FIG. 7 is an exemplary block diagram of a recommendation system 700 configured to generate, compile, validate, and deploy parameter-mapping rules between an ingress API and one or more egress APIs, according to embodiments of the present disclosure.

### DETAILED DESCRIPTION

The technical problem addressed by the present invention stems from the inefficiencies and limitations in manual configuration of API routers for discovering and transforming payload parameters between ingress and egress APIs in complex, dynamic environments. Traditional approaches require specialized developers to manually analyze API specifications, map disparate parameters (e.g., device identifiers, throughput units, or session durations), and define transformation rules, leading to delays, high error rates, scalability issues, and increased costs, particularly as API ecosystems grow and evolve with frequent updates to structures or business rules.

To overcome these challenges, embodiments of the invention provide a computer-implemented method for automated discovery and transformation of APIs, involving receiving descriptions of an ingress API and multiple egress APIs, computing similarity scores for parameter pairs using natural language processing (NLP) techniques by comparing parameter definitions, constructing a similarity matrix (e.g., an N x M matrix where N is the number of ingress parameters and M the total across egress APIs) from scores ranging from 0 to 1, selecting pairs exceeding a predetermined threshold (e.g., greater than or equal to 0.5), and generating pseudo code via a generative artificial intelligence (GenAI) model to define transformation logic (e.g., one-liner conversions) for mapping data, with optional regular expression generation. For low-score pairs, the method enables manual processing as a fallback, and supports real-time execution of the pseudo code for transforming payload data, such as converting date formats to expiry parameters, thereby facilitating efficient, hybrid automated-manual handling in diverse API scenarios.

Corresponding system embodiments include one or more processors and a non-transitory computer-readable storage medium storing instructions to execute the aforementioned method, integrated with components like an API router for routing calls using generated pseudo code, a database for storing matrices and pseudo code for subsequent transformations, and mechanisms for real-time payload data mapping. This hybrid system architecture, as illustrated in exemplary block diagrams and flowcharts, supports scalable API integration by automating parameter pairing and logic generation while allowing manual intervention, thus addressing manual configuration gaps and enabling applications in fields like telecommunications where precise, low-latency transformations are critical.

Before describing specific embodiments in detail, certain key terms and concepts are defined herein to facilitate understanding of the invention. As used in this disclosure, an "ingress API" refers to an application programming interface that serves as an entry point for receiving incoming requests, including associated payload parameters such as data elements like device identifiers, throughput values, units, or durations, as exemplified in the schemas of various API calls. An "egress API" denotes an outbound API that processes or forwards requests to downstream systems, potentially involving transformed parameters like mobile codes, bit rates, or expiry timestamps. A "payload parameter" encompasses any data field within an API call or response, including schemas, examples, defaults, and definitions that require mapping or transformation for interoperability. The term "similarity score" indicates a quantitative measure, typically in a numerical range of 0 to 1, assessing the semantic or structural likeness between pairs of payload parameters using techniques such as natural language processing (NLP). "Pseudo code" means a high-level, human-readable representation of transformation logic, often as a one-liner conversion (e.g., adapting a duration parameter to an expiry format), generated via generative artificial intelligence (GenAI) models to define data mapping rules. These definitions are consistent with the operational context of the invention and are not intended to limit the scope of the claims.

The disclosed embodiments provide a hybrid approach to API management that addresses the aforementioned technical problems by automating the discovery and transformation processes while incorporating fallback mechanisms for complex cases. In operation, the method and system leverage processing circuitry to analyze API descriptions-encompassing schemas, examples, defaults, and definitions-without requiring manual coding for every parameter pair. This automation reduces errors associated with manual configurations, as highlighted in traditional systems where inconsistencies in parameter handling lead to operational disruptions. Benefits include enhanced scalability for environments with proliferating APIs, such as telecommunications networks or cloud infrastructures, where an ingress API may route to dozens of egress APIs. The invention improves efficiency by generating executable logic that can be stored, reused, or executed in real-time, thereby minimizing deployment times and resource strain. Security is also bolstered through precise transformations that maintain data integrity across API boundaries, mitigating risks like misconfigurations or vulnerabilities in high-stakes applications.

Various alternative embodiments are contemplated to adapt the invention to different use cases. For instance, the predetermined threshold for similarity scores may be adjustable (e.g., between 0.4 and 0.7) based on application needs, allowing flexibility in environments requiring stricter or looser matching criteria. NLP models can vary, including pre-trained language models or custom-trained variants, while GenAI techniques may employ models like transformers for pseudo code generation. Deployment options include on-premises servers, cloud-based platforms, or edge computing nodes, with integration patterns supporting diverse data sources. In some variations, the system incorporates manual processing prompts for pairs below the threshold, enabling user overrides or refinements, and may generate additional artifacts like regular expressions for pattern-based transformations. These alternatives ensure broad applicability without departing from the core inventive principles.

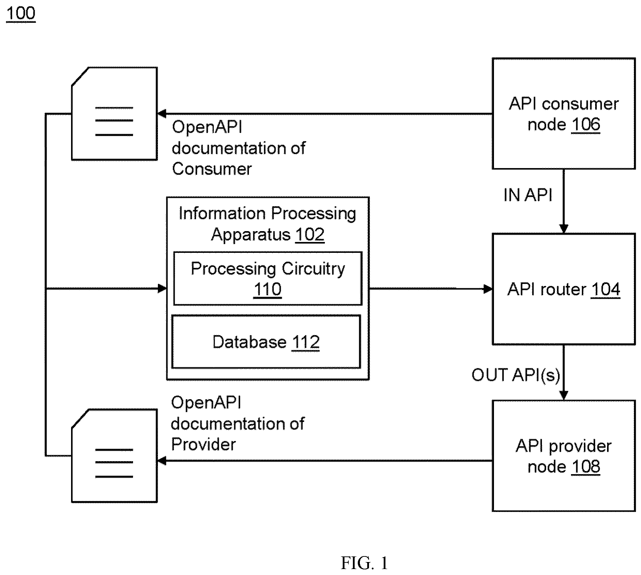

The following detailed description references the accompanying drawings, which illustrate specific embodiments of the disclosure by way of example. FIG. 1 is a block diagram that illustrates a system 100 for auto discovery of Application Programming Interfaces (APIs), according to an embodiment of the present disclosure. The system 100 may be configured to develop and execute payload parameter transformation rules between an ingress API call and a plurality of egress API calls for auto discovery of APIs, enabling automated mapping and conversion of parameters to facilitate seamless interoperability. Specifically, the system 100 may be configured to provide a hybrid (i.e., a semi-automated) model for auto discovery of APIs, defined as a combination of automated processes like NLP scoring and GenAI logic generation with manual oversight for complex cases, addressing limitations in fully manual systems by balancing efficiency and accuracy. The system 100 may include an information processing apparatus 102, an API router 104, an API consumer node 106, and an API provider node 108. The information processing apparatus 102, the API router 104, the API consumer node 106, and the API provider node 108 may be configured to communicate with each other and other entities within the system 100 by way of a communication network (not shown) or through separate communication networks (not shown) established therebetween, supporting data exchange for transformation rules and API calls.

The communication network may include suitable logic, circuitry, and interfaces that may be configured to provide a plurality of network ports and a plurality of communication channels for transmission and reception of data related to operations of various entities in the system 100. Each network port may correspond to a virtual address (or a physical machine address) for transmission and reception of the communication data. For example, the virtual address may be an Internet Protocol Version 4 (IPV4) (or an IPV6 address) and the physical address may be a Media Access Control (MAC) address. The communication network may be associated with an application layer for implementation of communication protocols based on one or more communication requests from the information processing apparatus 102, the API router 104, the API consumer node 106, and the API provider node 108. The communication data may be transmitted and/or received, via the communication protocols. Examples of the application and communication protocols may include, but are not limited to, Hypertext Transfer Protocol (HTTP), File Transfer Protocol (FTP), Simple Mail Transfer Protocol (SMTP), Domain Network System (DNS) protocol, Common Management Interface Protocol (CMIP), Transmission Control Protocol and Internet Protocol (TCP/IP), User Datagram Protocol (UDP), Long Term Evolution (LTE) communication protocols, or any combination thereof. Embodiments of the present disclosure are intended to include and/or otherwise cover any type of the communication protocols, including known, related art, and/or later developed technologies, such as emerging 5G/6G protocols for low-latency API transformations. This network setup supports the system's hybrid model by enabling real-time data flow for automated scoring and manual interventions, as per claim elements for processor-based communication.

In one embodiment, the communication data may be transmitted or received via at least one communication channel of a plurality of communication channels in the communication network. The communication channels may include, but are not limited to, a wireless channel, a wired channel, a combination of wireless and wired channel thereof. The wireless or wired channel may be associated with a data standard which may be defined by one of a Local Area Network (LAN), a Personal Area Network (PAN), a Wireless Local Area Network (WLAN), a Wireless Sensor Network (WSN), Wireless Area Network (WAN), Wireless Wide Area Network (WWAN), a Metropolitan Area Network (MAN), a Satellite Network, the Internet, a Fiber Optic Network, a Coaxial Cable Network, an Infrared (IR) network, a Radio Frequency (RF) network, and a combination thereof. Embodiments of the present invention are intended to include or otherwise cover any type of communication channel, including known, related art, and/or later developed technologies, such as hybrid 5G-satellite networks for global API discovery. These channels facilitate secure and efficient transmission of parameter data and transformation rules, enhancing the system's ability to handle diverse ingress-egress interactions in distributed environments.

The information processing apparatus 102 may be a network of computers, a framework, or a combination thereof, that may provide a generalized approach to create a server implementation, serving as the central hub for processing API specifications and generating transformation logic. Examples of elements included in the information processing apparatus 102 may include, but are not limited to, personal computers, laptops, mini-computers, mainframe computers, any non-transient and tangible machine that can execute a machine-readable code, cloud-based servers, distributed server networks, or a network of computer systems. The information processing apparatus 102 may be realized through various web-based technologies such as, but not limited to, a Java web-framework, a .NET framework, a Hypertext Preprocessor (PHP) framework, or any other web-application framework, enabling scalable deployment for high-volume API processing. The information processing apparatus 102 may include one or more processing circuitries of which processing circuitry 110 is shown and a non-transitory computer-readable storage medium 112, collectively supporting the hybrid model by automating computations while allowing manual fine-tuning.

As discussed, the information processing apparatus 102 may include the processing circuitry 110 and the non-transitory computer-readable storage medium 112 (hereinafter interchangeably referred to and designated as "the database 112"). The processing circuitry 110 may be configured to execute various operations associated with the system 100. Specifically, the processing circuitry 110 may be configured to execute the one or more operations associated with the system 100 by communicating one or more commands and/or instructions over the communication network to the API router 104, the API consumer node 106, the API provider node 108, and other entities in the system 100. Examples of the processing circuitry 110 may include, but are not limited to, an Application Specific Integrated Circuit (ASIC) processor, a Reduced Instruction Set Computing (RISC) Processor, a Complex Instruction Set Computing (CISC) Processor, a Field Programmable Gate Array (FPGA), a Programmable Logic Control unit (PLC), and the like. Embodiments of the present disclosure are intended to include or otherwise cover any type of the processing circuitry 110, including known, related art, and/or later developed technologies, such as AI accelerators for GenAI tasks. This circuitry enables efficient execution of NLP scoring and pseudo code generation, as per claim elements for processors performing the method.

The non-transitory computer-readable storage medium 112 may be configured to store the logic, instructions, circuitry, interfaces, and/or codes of the processing circuitry 110 for executing various operations. It will be apparent to a person having ordinary skill in the art that the database 112 may be configured to store various types of data associated with the system 100, without deviating from the scope of the present disclosure, including similarity matrices and generated pseudo code for reuse. Examples of the database 112 may include but are not limited to, a Relational database, a NoSQL database, a Cloud database, an Object-oriented database, and the like. Further, the database 112 may include associated memories that may include, but is not limited to, a Read-Only Memory (ROM), a Random Access Memory (RAM), a Flash Memory (FM), a Removable Storage Drive (RSD), a Hard Disk Drive (HDD), a Solid State Drive (SSD), a Magnet Storage Drive (MSD), an optical drive, a Programmable Read Only Memory (PROM), an Erasable PROM (EPROM), and/or an Electrically EPROM (EEPROM). Embodiments of the present disclosure are intended to include or otherwise cover any type of the database 112 including known, related art, and/or later developed technologies, such as distributed cloud storage for high-availability API data. In some embodiments of the present disclosure, a set of centralized or distributed network of peripheral memory devices may be interfaced with the information processing apparatus 102, as an example, on a cloud server, supporting scalable storage for large-scale API transformations.

The API router 104 may include suitable logic, instructions, circuitry, interfaces, and/or codes for executing various operations, such as directing incoming API calls to one or more appropriate handlers and/or services. Specifically, the API router 104 may be configured to act as a traffic controller within an application, that ensures that each request is processed by a correct endpoint based on a URL path, HTTP method, and other request parameters, facilitating efficient routing of transformed data. Further, the API router 104 may be configured to be responsible for scalability and maintainability of an application by decoupling a routing logic from a business logic, thereby allowing developers to organize and manage routes efficiently, which is critical for handling multiple egress calls in the hybrid model. As illustrated, the API router 104 may be configured to receive an ingress API call from the API consumer 106. Further, the API router 104 may be configured to transmit a plurality of egress API calls to the API provider 108. The API consumer node 106 may be any device and/or program communicably coupled with the API router 104 that consumes managed APIs. In some embodiments of the present disclosure, the API consumer node 106 may technically be a server or client depending on the initiation of a specific API call. In other words, the API consumer node 106 may be any entity such as a software application, device, or user that interacts with the API router 104 to access its services or data. The API consumer node 106 may be configured to make requests and/or API calls to an endpoint of the API provider node 108 to retrieve information, execute commands, or perform transactions, supporting the system's end-to-end transformation flow. This configuration enhances the system's ability to handle real-time requests, as per claim elements for routing with generated pseudo code, with alternatives like load-balanced routers for high-traffic scenarios.

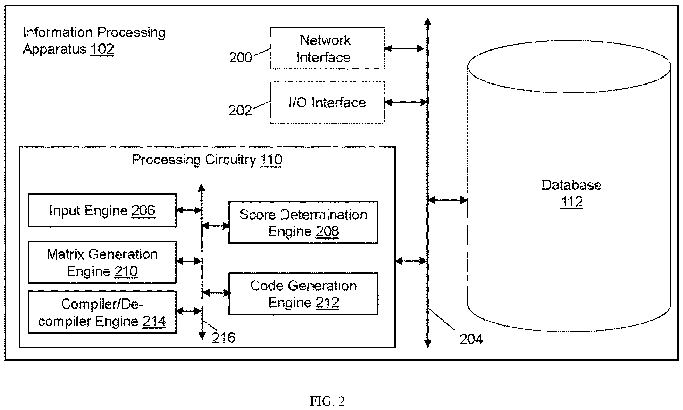

FIG. 2 is a block diagram that illustrates the information processing apparatus 102 of FIG. 1, according to an embodiment of the present disclosure. As discussed, the information processing apparatus 102 may include the processing circuitry 110 and the database 112, forming the core for executing API discovery and transformation operations. Further, the information processing apparatus 102 may include a network interface 200 and an input/output (I/O) interface 202. The processing circuitry 110, the database 112, the network interface 200, and the I/O interface 202 may communicate with each other by way of a first communication bus 204, enabling efficient data exchange for system functions. In some embodiments of the present disclosure, the processing circuitry 110 may include an input engine 206, a score determination engine 208, a matrix generation engine 210, a code generation engine 212, and a compiler/de-compiler engine 214. The input engine 206, the score determination engine 208, the matrix generation engine 210, the code generation engine 212, and the compiler/de-compiler engine 214 may communicate with each other by way of a second communication bus 216, supporting modular and scalable processing. It will be apparent to a person having ordinary skill in the art that the information processing apparatus 102 is for illustrative purposes and not limited to any specific combination of hardware circuitry and/or software, allowing for flexible implementations like distributed cloud setups as alternatives.

The network interface 200 may include suitable logic, circuitry, and interfaces that may be configured to establish and enable a communication between the information processing apparatus 102 and different components of the system via the communication network. The network interface 200 may be implemented by use of various known technologies to support wired or wireless communication of the information processing apparatus 102 with the communication network, facilitating data flow for API specifications and transformation outputs. The network interface 200 may include, but is not limited to, an antenna, a RF transceiver, one or more amplifiers, a tuner, one or more oscillators, a digital signal processor, a CODEC chipset, a SIM card, and a local buffer circuit, enabling robust connectivity for real-time operations. The I/O interface 202 may include suitable logic, circuitry, interfaces, and/or code that may be configured to receive inputs and transmit server outputs (i.e., one or more outputs generated by the information processing apparatus 102) via a plurality of data ports in the information processing apparatus 102. The I/O interface 202 may include various input and output data ports for different I/O devices. Examples of such I/O devices may include, but are not limited to, a touch screen, a keyboard, a mouse, a joystick, a projector audio output, a microphone, an image-capture device, a liquid crystal display (LCD) screen and/or a speaker, supporting user interaction for manual fallback in the hybrid model.

The processing circuitry 110 may be configured to execute various operations associated with the system 100. Specifically, the processing circuitry 110 may be configured to execute the one or more operations associated with the system 100 by communicating one or more commands and/or instructions over the communication network to different entities in the system 100, coordinating tasks like similarity scoring and code generation. The processing circuitry 110 may be configured to perform one or more operations associated with the system 100 by way of the input engine 206, the score determination engine 208, the matrix generation engine 210, the code generation engine 212, and the compiler/de-compiler engine 214, enabling modular execution of the auto-discovery method as per the claims.

The input engine 206 may include suitable logic, instructions, circuitry, interfaces, and/or codes for executing various operations, such as reception of specifications from the API consumer 106 and the API provider 108. The input engine 206 may be configured to receive the specification of an ingress API call from the API consumer 106 through an ingress API. Further, the input engine 206 may be configured to receive the specification of a plurality of egress API calls from the API provider 108 through one or more egress API. In some embodiments of the present disclosure, the ingress API and the one or more egress APIs are standard APIs, ensuring compatibility for broad adoption. In some embodiments of the present disclosure, the specification of the ingress API call and the plurality of egress API calls may be OpenAPI specifications (i.e., in a standard format followed by all OpenAPIs) of the API consumer 106. Specifically, the OpenAPI specification of the API consumer 106 may be an API description format for REST APIs that describe an entire API, such as, but not limited to, available endpoints (/users) and operations on each endpoint (GET /users, POST /users), operation parameters, input and output for each operation, and the like, without deviating from the scope of the present disclosure. Advantageously, presentation of APIs in OpenAPI format enables extraction of description, default values, and examples for each payload parameter in the payload and using the extracted descriptions and information as input features for the score determination engine 208 and the code generation engine 210, streamlining the similarity analysis process. In some embodiments of the present disclosure, the specification of the ingress API call as mentioned herein may refer to the specific details and requirements associated with the ingress API call that may enable initiation of communication and/or data transfer. In some embodiments of the present disclosure, the specification of the egress API call as mentioned herein may refer to the specific details and requirements that may be associated with egress API calls that may enable response to, and/or conclude communication initiated by the ingress API call. This engine supports the system's hybrid model by providing structured inputs for automated processing, with alternatives like supporting non-OpenAPI formats through adapters.

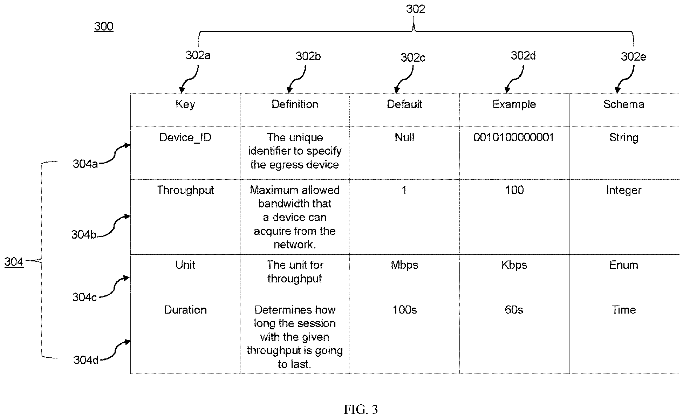

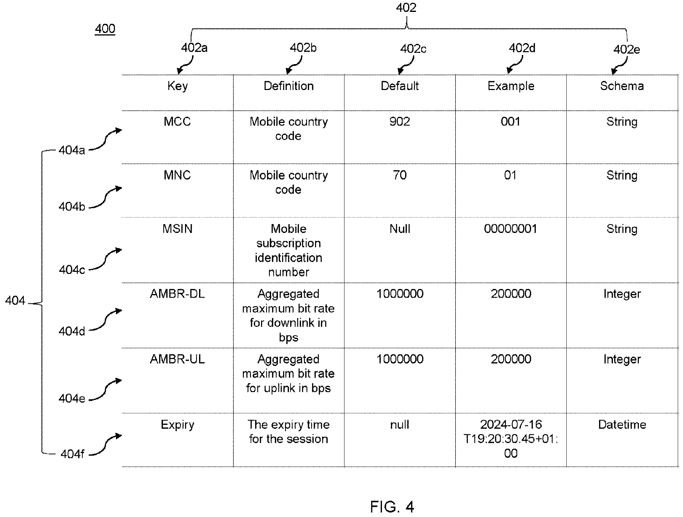

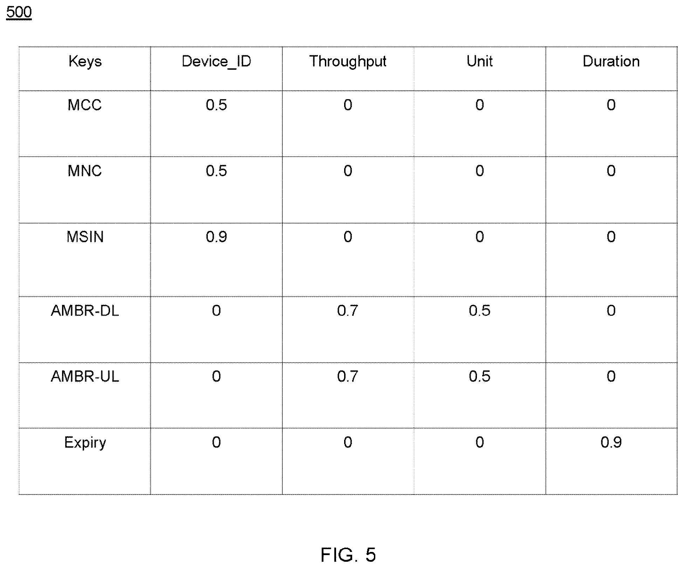

The score determination engine 208 may include suitable logic, instructions, circuitry, interfaces, and/or codes for executing various operations, such as determination of a similarity score. The score determination engine 208 may be configured to determine the similarity score between a plurality of pairs of payload parameters by way of a Natural Language Processing (NLP) technique, enabling quantitative assessment for auto-discovery. In some embodiments of the present disclosure, the score determination engine 208 may be configured to run NLP on a definition of each payload parameter of the ingress API call and a definition of each payload parameter of each egress API call of the plurality of egress API calls. Further, the score determination engine 208, by way of the NLP technique, may compare the definition of each payload parameter of the ingress API call with the definition of each payload parameter of each egress API call of the plurality of egress API calls. Further, based on the comparison, the score determination engine 208 may be configured to determine the similarity score between each pair of the plurality of pairs of payload parameters. Specifically, each pair of the plurality of pairs of payload parameters may include a payload parameter from the specification of the ingress API call (as shown in FIG. 3) and a payload parameter from the specification of an egress API call (as shown in FIG. 4) of the plurality of egress API calls. For example, a pair of the plurality of pairs of payload parameters may include Device_ID and MCC (as shown in FIG. 5). Similarly, another pair of the plurality of pairs of payload parameters may include Device_ID and MNC. In some embodiments of the present disclosure, the similarity score for each pair of the plurality of pairs of payload parameters may have a numerical value that is in a range of 0 to 1. For example, as shown in FIG. 5, the similarity score for the pair of Device_ID and MCC is 0.5. As discussed herein, the score determination engine 208 may be configured to determine the similarity score by comparing only the definitions of each payload parameters for the ingress API call and each egress API call of the plurality of egress API calls by way of the NLP technique, focusing on semantic alignment to minimize computational overhead. This engine supports claim elements for NLP model application, with alternatives like using advanced NLP variants (e.g., transformers) for improved accuracy in diverse languages.

The matrix generation engine 210 may include suitable logic, instructions, circuitry, interfaces, and/or codes for executing various operations such as, generating the similarity matrix 500 (as shown later in FIG. 5). Specifically, the matrix generation engine 210 may be configured to generate the similarity matrix based on the determined similarity score between the plurality of pairs of payload parameters. As shown in FIG. 5, the similarity score for a pair of payload parameters (i.e., Device_ID and MCC) is 0.5. Similarly, the similarity score for a pair of payload parameters (i.e., Device_ID and MNC) is 0.5. In some embodiments of the present disclosure, the matrix generation engine 210 may be configured to generate the similarity matrix 500 by populating the similarity matrix 500 with the similarity score corresponding to each pair of payload parameters of the plurality of pairs of payload parameters. The similarity score for each pair of the plurality of pairs of payload parameters may have a numerical value that is in the range of 0 to 1. Specifically, a similarity score of 0 denotes that a degree of closeness between the definition of the payload parameters in a pair of payload parameters is lowest and a similarity score of 1 denotes that a degree of closeness between the definition of the payload parameters in a pair of payload parameters is highest. the similarity matrix 500 may be a NxM matrix. Specifically, in the NxM matrix, N is the number of the plurality of payload parameters in the ingress API call. Referring to FIG. 3, the number of the plurality of payload parameters in the ingress API call is 4. Further, in the NxM matrix, M is a sum of the payload parameters in the plurality of egress API calls. Referring to FIG. 3, as only one egress API call is considered, the sum of the payload parameters in the egress API call is 6. Thus, the NxM matrix (i.e., the similarity matrix) is a 4x6 matrix. Although FIG. 5 illustrates that the similarity matrix 500 is a 4x6 matrix, it will be apparent to a person skilled in the art that the scope of the present disclosure is not limited to such a matrix, and the actual matrix can be larger or smaller. In various other embodiments of the present disclosure, the similarity matrix 500 may have any value for N and M depending upon the OpenAPI specifications of the ingress API call and a number of the plurality of egress API calls, respectively, without deviating from the scope of the present disclosure. This engine supports claim elements for matrix construction, with alternatives like dynamic matrix scaling for batch processing.

The code generation engine 212 may include suitable logic, instructions, circuitry, interfaces, and/or codes for executing various operations such as, generating a pseudo code that represents a conversion logic between each pair of the plurality of pairs of payload parameters. Specifically, the code generation engine 212 may be configured to implement a Generative Artificial Intelligence (GenAI) technique to process information corresponding to each payload parameter of the ingress API call and the plurality of egress API calls to generate the pseudo code that represents a conversion logic between each pair of the plurality of pairs of payload parameters, enabling automated mapping for high-similarity pairs. In some embodiments of the present disclosure, the information corresponding to each payload parameter of the ingress API call and the plurality of egress API calls may be one of, default value, example value, schema, or a combination thereof (as shown in FIG. 3 and FIG. 4, respectively). This engine supports claim elements for GenAI model usage, with alternatives like incorporating domain-specific training data for customized logic.

Although FIG. 3 and FIG. 4 illustrate that the information corresponding to each payload parameter of the ingress API call and the plurality of egress API calls may be one of, default value, example value, schema, it will be apparent to a person skilled in the art that the scope of the present disclosure is not limited to those illustrations. In various other embodiments of the present disclosure, the information corresponding to each payload parameter of the ingress API call and the plurality of egress API calls may be different, without deviating from the scope of the present disclosure, such as including additional attributes like constraints or enums for enhanced analysis. In some embodiments of the present disclosure, the code generation engine 212 may be configured to compare each similarity score corresponding to each pair of payload parameters from the similarity matrix 500 with a threshold value. In some embodiments of the present disclosure, the threshold value of the similarity score may be greater than or equal to the threshold (e.g., 0.5), providing a configurable boundary for automating transformations. In an exemplary scenario, when the score generation engine 212 determines that for a pair of payload parameters from the plurality of pairs of payload parameters, the similarity score is greater than or equal to the threshold (e.g., 0.5), the code generation engine 212 generates a pseudo code that represents a conversion logic between the payload parameters of that pair. For example, as shown in FIG. 5, the similarity score between the pair of payload parameters (i.e., the pair of AMBR-DL and Throughput) is greater than the threshold (e.g., 0.5), therefore, the code generation engine 212 may be configured to generate a pseudo code given below that may enable derivation of AMBR-DL from Throughput:

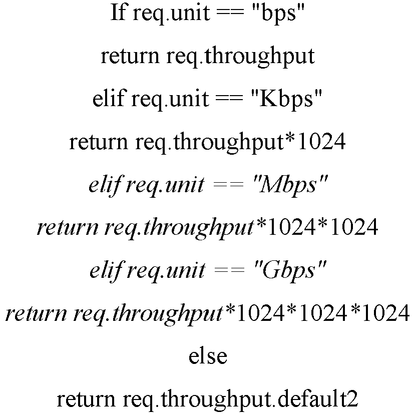

This conditional pseudo code exemplifies GenAI-generated logic for unit-based conversions, supporting claim elements for transformation logic and enabling hybrid processing where high scores automate derivation while allowing manual refinement for edge cases, with benefits like reduced errors in bandwidth mappings.

The compiler/de-compiler engine 214 may include suitable logic, instructions, circuitry, interfaces, and/or codes for executing various operations such as, generating translational formulas that can convert human readable pseudo codes (the pseudo code for each pair of payload parameters) into one-liners, and vice versa. The compiler/de-compiler engine 214 may be configured to generate a regular expression for each pair of the plurality of pairs of payload parameters based on the pseudo code generated for each pair of the plurality of pairs of payload parameters to enable human intervention and pruning of auto generated logics (i.e., the pseudo codes). Advantageously, the one-liner may be adapted for transformation between the ingress API call and the plurality of egress API calls, facilitating efficient data mapping in auto discovery scenarios. Specifically, the transformation between the ingress API call and the plurality of egress API calls may be achieved by transforming the payload parameters of the ingress API call and the plurality of egress API calls for auto discovery of APIs. In an exemplary scenario, the transformation formula generated by the compiler/de-compiler engine 214 for the payload parameter "Expiry" of the ingress API call is given by: Expiry = "rsp.time.now()+req.duration" here, rsp. refers to external components that provide information through an egress API call, and req. extract the value of the specific parameters in the ingress API call. In another exemplary scenario, the pseudo code that enables derivation of AMBR-DL from Throughput is:

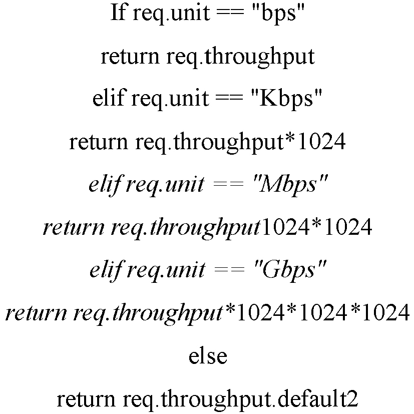

This repeated conditional example reinforces unit handling, supporting claim elements for regular expression generation and one-liner adaptation, with alternatives like multi-line variants for complex conversions.

The compiler/de-compiler engine 214 may be configured to perform a ternary operation on the above pseudo code to generate a single line expression (a one-liner) transformation between the ingress API call and the plurality of egress API calls for auto discovery of APIs. This operation condenses the logic into an efficient form, enabling quick deployment in routing, and ties to the system's hybrid model by allowing operator pruning for accuracy, with benefits like improved maintainability in dynamic environments.

FIG. 3 illustrates a table 300 that depicts specifications of an ingress API call, according to an exemplary embodiment of the present disclosure. In an embodiment of the present disclosure, the specifications of the ingress API call may be OpenAPI specifications, standardizing parameter details for automated processing. As illustrated, the table 300 may include a plurality of columns 302, for example, first through fifth columns 302a-302e, and a plurality of rows 304, for example, first through fourth rows 304a-304d. Specifically, the first column 302a may include the plurality of payload parameters, the second column 302b may include the plurality of definitions corresponding to the plurality of payload parameters, respectively, the third column 302c may include the plurality of default values corresponding to the plurality of payload parameters, respectively, the fourth column 302d may include the plurality of example values corresponding to the plurality of payload parameters, respectively, and the fifth column 302e may include the plurality of schema corresponding to the plurality of payload parameters, respectively. Although FIG. 3 illustrates that the OpenAPI specifications of the ingress API call includes the 5 columns (i.e., the first through fifth columns 302a-302e), it will be apparent to a person skilled in the art that the scope of the present disclosure is not limited to five columns. In various other embodiments of the present disclosure, the OpenAPI specifications of the ingress API call may include more than five columns, without deviating from the scope of the present disclosure, such as adding columns for constraints or enums to support advanced similarity analysis. As illustrated, each row of the first through fourth rows 304a-304d may correspond to information of the plurality of payload parameters (i.e., device_id, throughput, unit, and duration). Specifically, the first row 304a may include a first payload parameter of the plurality of payload parameters (i.e., device_id) and corresponding information (i.e., definitions, default value, example value, and schema) of the first payload parameter. Similarly, the second row 304b may include a second payload parameter of the plurality of payload parameters (i.e., throughput) and corresponding information (i.e., definitions, default value, example value, and schema) of the second payload parameter. Similarly, the third row 304c may include a third payload parameter of the plurality of payload parameters (i.e., unit) and corresponding information (i.e., definitions, default value, example value, and schema) of the third payload parameter. Similarly, the fourth row 304d may include a fourth payload parameter of the plurality of payload parameters (i.e., duration) and corresponding information (i.e., definitions, default value, example value, and schema) of the fourth payload parameter. This table structure supports the system's input engine for extracting data, enabling NLP comparisons as per the claims, with benefits like standardized parameter handling for reduced errors.

FIG. 4 illustrates a table 400 that depicts specifications of an egress API call of the plurality of egress API calls, according to an exemplary embodiment of the present disclosure. In an embodiment of the present disclosure, the specifications of the egress API call of the plurality of egress API calls may be OpenAPI specifications, facilitating consistent outbound parameter mapping. As illustrated, the table 400 may include a plurality of columns 402, for example, first through fifth columns 402a-402e, and a plurality of rows 404, for example, first through sixth rows 404a-404f. Specifically, the first column 402a may include the plurality of payload parameters, the second column 402b may include the plurality of definitions corresponding to the plurality of payload parameters, respectively, the third column 402c may include the plurality of default values corresponding to the plurality of payload parameters, respectively, the fourth column 402d may include the plurality of example values corresponding to the plurality of payload parameters, respectively, and the fifth column 402e may include the plurality of schema corresponding to the plurality of payload parameters, respectively. Although FIG. 4 illustrates that the OpenAPI specifications of the egress API call includes the 5 columns (i.e., the first through fifth columns 402a-402e), it will be apparent to a person skilled in the art that the scope of the present disclosure is not limited to five columns. In various other embodiments of the present disclosure, the OpenAPI specifications of the egress API call may include more than five columns, without deviating from the scope of the present disclosure, such as additional columns for response codes or security schemes. As illustrated, each row of the first through sixth rows 404a-404f may correspond to information of the plurality of payload parameters (i.e., MCC, MNC, MSIN, AMBR-DL, AMBR-UL, and Expiry). Specifically, the first row 404a may include a first payload parameter of the plurality of payload parameters (i.e., MCC) and corresponding information (i.e., definitions, default value, example value, and schema) of the first payload parameter. Similarly, the second row 404b may include a second payload parameter of the plurality of payload parameters (i.e., MNC) and corresponding information (i.e., definitions, default value, example value, and schema) of the second payload parameter. Similarly, the third row 404c may include a third payload parameter of the plurality of payload parameters (i.e., MSIN) and corresponding information (i.e., definitions, default value, example value, and schema) of the third payload parameter. Similarly, the fourth row 404d may include a fourth payload parameter of the plurality of payload parameters (i.e., AMBR-DL) and corresponding information (i.e., definitions, default value, example value, and schema) of the fourth payload parameter. Similarly, the fifth row 404e may include a fifth payload parameter of the plurality of payload parameters (i.e., AMBR-UL) and corresponding information (i.e., definitions, default value, example value, and schema) of the fifth payload parameter. Similarly, the sixth row 404f may include a sixth payload parameter of the plurality of payload parameters (i.e., Expiry) and corresponding information (i.e., definitions, default value, example value, and schema) of the sixth payload parameter. This table complements FIG. 3 for pair-wise comparisons, supporting the similarity matrix in FIG. 5, with benefits like standardized egress handling for multiple calls.

FIG. 5 illustrates a similarity matrix 500 generated based on the OpenAPI specification of the ingress API call of FIG. 3 and the OpenAPI specifications of the egress API call of FIG. 4, according to an exemplary embodiment of the present disclosure. In some embodiments of the present disclosure, the similarity matrix 500 may be a NxM matrix. Specifically, in the NxM matrix, N is the number of the plurality of payload parameters in the ingress API call. Referring to FIG. 3, the number of the plurality of payload parameters in the ingress API call is 4. Further, in the NxM matrix, M is a sum of the payload parameters in the plurality of egress API calls. Referring to FIG. 4, as only one egress API call is considered, the sum of the payload parameters in the egress API call is 6. Thus, the NxM matrix (i.e., the similarity matrix) is a 4x6 matrix. Although FIG. 5 illustrates that the similarity matrix 500 is a 4x6 matrix, it will be apparent to a person skilled in the art that the scope of the present disclosure is not limited to it. In various other embodiments of the present disclosure, the similarity matrix 500 may have any value for N and M depending upon the OpenAPI specifications of the ingress API call and a number of the plurality of egress API calls, respectively, without deviating from the scope of the present disclosure. The similarity matrix 500 may include a similarity score between each pair of payload parameters. Specifically, each pair of payload parameters may include a payload parameter from the specification of the ingress API call and a payload parameter from the specification of an egress API call of the plurality of egress API calls. As discussed, the similarity score between each pair of payload parameters may be determined by way of an NLP technique by comparing the definitions of each payload parameter of the ingress API call with definitions of each payload parameter of each egress API call of the plurality of egress API calls. In some embodiments of the present disclosure, the similarity score may have a numerical value that is in a range of 0 to 1. For example, the similarity score between MCC (i.e., the first payload parameter of the egress API call) and Device_ID (i.e., the first payload parameter of the ingress API call) determined by the NLP technique is 0.5. Similarly, the similarity score between Expiry (i.e., the sixth payload parameter of the egress API call) and Duration (i.e., the fourth payload parameter of the ingress API call) based on the NLP techniques is 0.9. This matrix supports threshold-based selection for GenAI processing, with alternatives like multi-matrix aggregation for batch APIs.

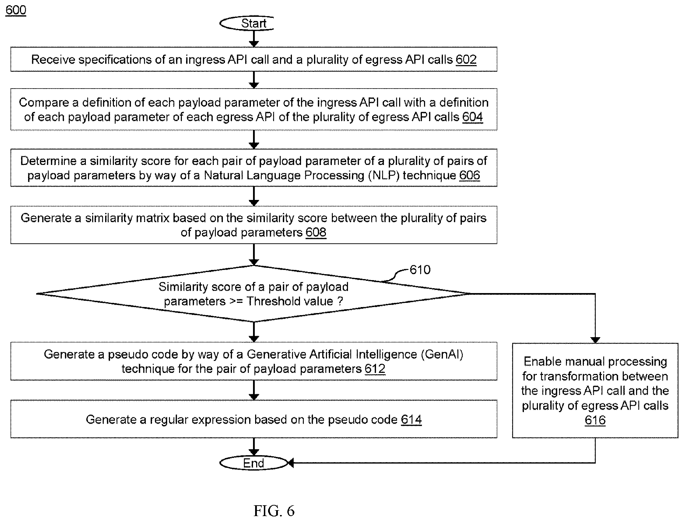

FIG. 6 illustrates a flowchart of a method 600 for auto discovery of APIs, according to embodiments of the present disclosure. This flowchart outlines the step-by-step operations executed by the system 100 to automate the discovery, similarity analysis, and transformation of payload parameters between ingress and egress APIs, providing a comprehensive guide to the hybrid process that integrates automation with manual oversight to address inefficiencies in traditional manual configurations. The method is performed by the processing circuitry 110, leveraging specialized engines to handle API specifications and generate logic, enabling scalable integration as supported by the claims.

At step 602, the system 100 may receive the specification of the ingress API call and the plurality of egress API calls. In some aspects of the present disclosure, the specification of the ingress API call and the plurality of specifications of the plurality of egress API calls may be the OpenAPI specifications, defined as standardized documents that include schemas, examples, defaults, and definitions for payload parameters, serving as the foundational input for the discovery process. This reception step, facilitated by the input engine 206, allows the system to ingest diverse API descriptions efficiently, addressing the initial technical challenge of gathering heterogeneous data without manual aggregation and supporting claim elements for receiving descriptions to initiate automated transformation.

At step 604, the system 100 may compare the definition of each payload parameter of the ingress API call with the definition of each payload parameter of each egress API of the plurality of egress API calls. This comparison step, executed by the score determination engine 208, involves pairwise analysis of semantic and structural attributes (e.g., definitions like "unique identifier" for device_id vs. "mobile subscription number" for MSIN), laying the groundwork for quantitative scoring and enabling the system to identify potential matches systematically, which reduces the subjectivity and time consumption of manual comparisons in traditional approaches, as illustrated in the schemas of FIGS. 3 and 4.

At step 606, the system 100 may determine the similarity score between the pairs of the payload parameters by employing the NLP technique. Specifically, the system 100 may be configured to determine the similarity score between the pairs of the payload parameters by implementing the NLP technique, such as using algorithms for semantic embedding or cosine similarity to evaluate likeness based on definitions, schemas, examples, and defaults. Each pair of the plurality of pairs of payload parameters may include (i) the payload parameter from the specification of the ingress API call and (ii) the payload parameter from the specification of the egress API call of the plurality of egress API calls, facilitating a comprehensive cross-comparison. In some aspects of the present disclosure, the similarity score may include the numerical value in the range of 0 to 1, where 0 indicates no similarity and 1 perfect match, directly supporting claim elements for score computation and enabling threshold-based decisions. This NLP-driven determination automates what would be a labor-intensive task, enhancing accuracy and scalability for large API sets, with alternative embodiments allowing for custom NLP models or weighting factors to optimize for specific industries.

At step 608, the system 100 may generate the similarity matrix based on the similarity score between the plurality of pairs of payload parameters. In some aspects of the present disclosure, the similarity matrix may be the NxM matrix such that N is the number of payload parameters of the ingress API call and M is the sum of the plurality of payload parameters of the plurality of egress API calls, aggregating scores into a structured grid as exemplified in FIG. 5. This generation step, handled by the matrix generation engine 210, provides a comprehensive overview that facilitates efficient identification of transformable pairs, addressing fragmentation issues in manual systems and supporting claim elements for constructing the matrix from computed scores.

At step 610, the system 100 may compare the similarity score of each pair of payload parameters of the plurality of pairs of payload parameters with a threshold value. In this example, the threshold value is 0.5. However, the threshold value may be different and may fall at any point in the range of 0 to 1, allowing flexibility for application-specific tuning, such as higher thresholds for high-precision environments. When the system 100 determines that the similarity score of any pair of payload parameters of the plurality of pairs of payload parameters is greater than or equal to the threshold value, the method 600 may proceed to a step 612, otherwise the method 600 may proceed to a step 616. This decision point embodies the hybrid nature of the system, directing high-confidence pairs to automation while routing others to manual intervention, optimizing efficiency and reliability as per the claims.

At step 612, the system 100 may generate a pseudo code for any pair of payload parameters of the plurality of pairs of payload parameters having the similarity score of greater than the threshold value. Specifically, the system 100 may generate the pseudo code based on the specification of the ingress API and the plurality of specifications of the plurality of egress APIs. Specifically, the processing circuitry 110 may be configured to generate the pseudo code based on the specification of the ingress API and the plurality of specifications of the plurality of egress APIs respectively, by implementing the GenAI technique, defined as using generative models to produce human-readable code from parameter information. In some aspects of the present disclosure, the pseudo code may represent the conversion logic between each pair of the plurality of pairs of payload parameters, such as one-liners or conditional scripts for data mapping. In some aspects of the present disclosure, the GenAI technique may utilize information corresponding to each payload parameter of the ingress API call and the plurality of egress API calls, including schemas, examples, and defaults, to ensure context-aware generation. This step supports claim elements for GenAI-based pseudo code, with alternatives like using different GenAI models for customized logic in varied API domains.

At step 614, the system 100 may generate the one-liner based on the pseudo code. Specifically, the system 100 may be configured to generate the one-liner based on the pseudo code, by way of the processing circuitry 110, condensing the logic into a compact, executable form. Advantageously, the one-liner may be adapted for transformation between the ingress API call and the plurality of egress API calls for auto discovery of APIs, enabling efficient deployment in routing scenarios and supporting claim elements for practical application, with alternatives including multi-line variants for complex transformations.

At step 616, the system 100 may enable manual processing for transformation between the ingress API call and the plurality of egress API calls for auto discovery of APIs. This step allows experts to review and define custom logic for low-similarity pairs, integrating outputs into the system for hybrid efficiency, as supported by the claims for manual fallback.

Thus, the system 100 and the method 600 of the present disclosure may facilitate efficient transformation of payload parameters of an ingress API to multiple egress APIs. The system 100 and the method 600 may facilitate reduction in time by automating the mapping and transformation of payloads parameter for auto discovery of APIs, minimizing delays in resource-constrained teams through NLP and GenAI integration. The system 100 and the method 600 may facilitate generation of transformation formulas by implementation of the Generative Artificial Intelligence (GenAI) technique that reduces the need of manual derivation and thereby reduces error, ensuring accurate logic for complex pairs. The system 100 and the method 600 may further facilitate experts to review and fine tune the logic involved in the transformation of the ingress API to the multiple output APIs, promoting a hybrid model that combines AI precision with human expertise. The system 100 and the method 600 may be configured to utilize both Artificial Intelligence (AI) and human involvement that results in accurate transformations, providing benefits like improved scalability, data integrity, and adaptability in dynamic environments, as distinguished from prior art lacking such integrated hybrid approaches. In alternative embodiments, the system could incorporate feedback loops for iterative GenAI refinements or integration with external tools for enhanced review, further broadening applicability.

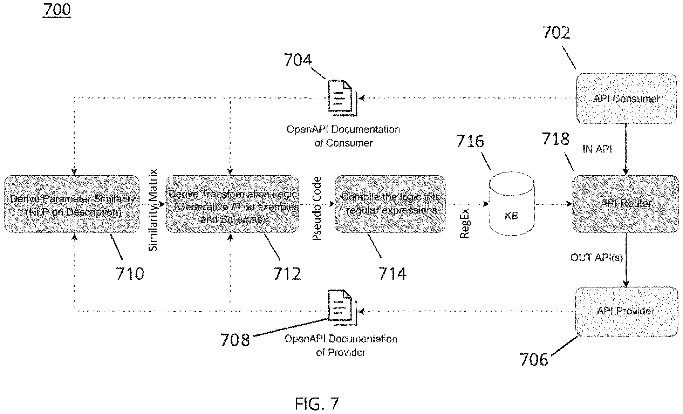

FIG. 7 shows a processing of information from API Customers and API Providers to transform a single set of parameters relating to an API input into a one-liner of a recommendation for conversion into one of a multiple of API outputs. The one-liner can be conveyed, for example, as a single line or multiple lines of text, defined as a condensed, human-readable representation of transformation logic that facilitates efficient mapping between ingress and egress parameters for auto discovery. As shown in FIG. 7, in this example of a recommendation system 700, input parameters from a Consumer API 702 are received in the form of OpenAPI documentation 704, serving as standardized inputs that include schemas, examples, defaults, and definitions for ingress payload parameters like device_id or throughput. Similarly, output parameters are received from the Provider API 706 in the form of OpenAPI documentation 708, encompassing egress parameters such as MCC or Expiry. Some example datasets of input parameters and output parameters can be found at GitHub - jdegre/5GC_APIs: RESTful APIs of main Network Functions in the 3GPP 5G Core Network and CAMARA OpenAPI for Quality on Demand (QoD), providing curated resources for training and validation in real-world API scenarios. Each of the input parameters and the output parameters are routed to a Natural Language Processing (NLP) engine 710, defined as a computational module that analyzes textual attributes like definitions and examples to compute semantic similarities. Providing the API parameters in the OpenAPI standard enables extraction of description, default values, and examples for each parameter in the payload, ensuring structured inputs that enhance processing accuracy. These parameters can be used as inputs into the NLP engine 710 in the recommendation system 700, facilitating automated pair-wise comparisons as described in the method of FIG. 6. The NLP engine 710 helps in the processing of the OpenAPI parameters and determining the similarities of the various input and output parameters, leveraging techniques like semantic embedding to generate quantitative scores. The output from the NLP engine is in the form of a similarity matrix, for example, as shown in FIG. 5, and is sent to a transformation engine 712, which aggregates scores to identify high-similarity pairs for further logic generation. The transformation engine 712 processes the matrix and generates transformation formulas among the parameters, which operates to form a conversion logic, for example, generated using Generative AI, based on examples and schemas from the parameters of source to destination APIs, such as creating pseudo code like Expiry = 'rsp.time.now()+req.duration' for temporal mappings. The output from the transformation engine 712 is a conversion logic output in the form of pseudo code, representing adaptable rules for data mapping. The Generative AI functionality of the transformation engine 712 is trained using data sets, such as, for example, data sets based on domain knowledge and expertise and relevant curated third-party data sets, enabling context-aware generation that reduces manual derivation errors. In certain embodiments, OpenAPI documentation 704 from the consumer API 702 and OpenAPI documentation 708 from the Provider API are used as inputs to the transformation engine 712, ensuring direct utilization of standardized parameter information for precise outputs. The conversion logic outputs from the transformation engine 712 are sent to a compiler 714, where the conversion logic is converted into one-liners, defined as optimized, executable snippets that condense complex transformations for efficient deployment. In the case of complex systems an operator may access the compiler 714 to monitor or prune the conversion logic, incorporating human oversight for hybrid processing as per the claims. From the compiler 714, the one-liners are sent to a computer readable storage medium or other memory device 716, such as, for example, a database, enabling persistent storage for subsequent retrieval and reuse in API transformations. After storage in the computer readable storage medium or other memory device 716, the one-liners may be transmitted to one or more processors, processing circuitry or other devices via the API router 718, facilitating real-time execution in routing scenarios. The API router 718 also receives communications. Specifically, the processor or processing circuitry may be configured to execute one or more operations associated with the system 700 by communicating one or more commands and/or instructions over the communication network to the API router 718, supporting dynamic API discovery and integration. This schematic addresses technical gaps in manual systems by automating parameter processing through NLP and GenAI, with benefits including time reduction, error minimization, and accurate transformations via hybrid AI-human involvement. In alternative embodiments, the system 700 could incorporate additional engines for feedback loops or use varied data sets for GenAI training, broadening applicability to domains like 5G networks or quality-on-demand services, as distinguished from prior art lacking such integrated recommendation flows.

As discussed, various embodiments of the present disclosure may be implemented in the system 100 that is suitable for storing and/or executing program code that includes at least one processor (i.e., the processing circuitry 110), including a multicore processor, coupled directly and/or indirectly to one or more memory elements such as the database 112 through a system bus (not shown). The memory elements include, for instance, local memory employed during actual execution of the program code, bulk storage, and cache memory which provide temporary storage of at least some program code in order to reduce the number of times code must be retrieved from bulk storage during execution, enabling efficient handling of API transformation tasks like similarity scoring and GenAI pseudo code generation.

The embodiments of the present disclosure provide significant technical and business advantages over conventional manual API management approaches. By automating the discovery and transformation logic generation, the disclosed system and method directly address the inefficiencies and risks outlined in the background. A key advantage is the reduction in development costs and time, as the automated process drastically cuts down the labor-intensive hours and specialized expertise required to manually inspect API specifications, map parameters, and write transformation rules, which translates directly into lower operational costs and allows development teams to focus on innovation rather than maintenance. Furthermore, the invention accelerates deployment and integration by replacing slow manual processes with near-instantaneous logic generation, enabling organizations to launch and update services with greater agility and achieve a faster time-to-market, which is particularly crucial in fast-paced sectors like telecommunications.

The system also offers improved reliability and a reduction in errors. Manual parameter mapping is highly susceptible to human error, which can lead to runtime failures, data corruption, and operational disruptions. The automated approach, guided by NLP-based similarity scoring and a defined threshold, ensures a higher degree of accuracy and consistency, thereby improving the overall reliability and robustness of the API ecosystem. Additionally, the disclosed system provides enhanced scalability, as traditional manual methods struggle to accommodate growth when the number of APIs increases. The system is inherently scalable, capable of processing large volumes of ingress and egress APIs to generate a comprehensive similarity matrix and corresponding transformation logic, ensuring that the integration process remains efficient as the ecosystem expands. Lastly, the system mitigates security risks by ensuring that parameter transformations are handled consistently and precisely, reducing the chance of misconfigurations that could expose sensitive data or create vulnerabilities. This automated precision also aids in adhering to data protection standards like GDPR or HIPAA, which demand strict control over data flows.

Input/Output or I/O devices (including, but not limited to, keyboards, displays, pointing devices, DASD, tape, CDs, DVDs, thumb drives and other memory media, etc.) can be coupled to the system either directly or through intervening I/O controllers, facilitating user interaction for manual fallback processing in low-similarity cases. Network adapters may also be coupled to the system to enable the data processing system to become coupled to other data processing systems or remote printers or storage devices through intervening private or public networks, such as the Internet, LAN, WAN, or wireless networks. Modems, cable modems, and Ethernet cards are just a few of the available types of network adapters, supporting distributed execution of the method across cloud or edge environments for real-time API discovery.

The present disclosure may be embodied in a system, a method, and/or a computer program product. The computer program product may include a computer readable storage medium (i.e., the database 112) having computer readable program instructions thereon for causing the processing circuitry 110 to carry out embodiments of the present disclosure. The computer readable storage medium 112 can be a tangible device that can retain and store instructions for use by an instruction execution device (i.e., the processing circuitry 110). The computer readable storage medium 112 may be, for example, but is not limited to, an electronic, magnetic, optical, electromagnetic, semiconductor storage device, or any suitable combination, such as portable computer diskettes, hard disks, RAM, ROM, EPROM or Flash memory, SRAM, CD-ROM, DVDs, memory sticks, floppy disks, or mechanically encoded devices like punch-cards.

Computer readable program instructions described herein can be downloaded to respective computing/processing devices from the computer readable storage medium 112 or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device, enabling seamless updates to GenAI models for pseudo code generation.

Computer readable program instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Python, Smalltalk, C++ or the like, and conventional procedural programming languages, such as the "C" programming language, "R" programming language or similar programming languages. A code segment or machine-executable instructions may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, among others. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a LAN or a WAN, or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform embodiments of the present disclosure, supporting flexible implementations for API transformation logic.

Embodiments of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer readable program instructions. The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions, enabling adaptable execution for the API discovery method.

Although preferred embodiments have been depicted and described in detail herein, it will be apparent to those skilled in the relevant art that various modifications, additions, substitutions and the like can be made without departing from the spirit of the disclosure, and these are, therefore, considered to be within the scope of the disclosure, as defined in the following claims, allowing for extensions like additional GenAI models or network configurations.

Features or functionality described with respect to certain example embodiments may be combined and sub-combined in and/or with various other example embodiments. Also, different embodiments and/or elements of example embodiments, as disclosed herein, may be combined and sub-combined in a similar manner as well. Further, some example embodiments, whether individually and/or collectively, may be components of a larger system, wherein other procedures may take precedence over and/or otherwise modify their application. Additionally, a number of steps may be required before, after, and/or concurrently with example embodiments, as disclosed herein, supporting flexible integration in API transformation workflows. Note that any and/or all methods and/or processes, at least as disclosed herein, can be at least partially performed via at least one entity or actor in any manner, including distributed or cloud-based executions.

The terminology used herein can imply direct or indirect, full or partial, temporary or permanent, action or inaction. For example, when an element is referred to as being "on," "connected" or "coupled" to another element, then the element can be directly on, connected or coupled to the other element and/or intervening elements can be present, including indirect and/or direct variants. In contrast, when an element is referred to as being "directly connected" or "directly coupled" to another element, there are no intervening elements present. Unless otherwise defined, all terms (including technical and scientific terms) used herein have the same meaning as commonly understood by one of ordinary skill in the art to which this disclosure belongs. The terms, such as those defined in commonly used dictionaries, should be interpreted as having a meaning that is consistent with their meaning in the context of the relevant art and should not be interpreted in an idealized and/or overly formal sense unless expressly so defined herein.

Although the terms first, second, etc. can be used herein to describe various elements, components, regions, layers and/or sections, these elements, components, regions, layers and/or sections should not necessarily be limited by such terms. These terms are used to distinguish one element, component, region, layer or section from another element, component, region, layer or section. Thus, a first element, component, region, layer, or section discussed below could be termed a second element, component, region, layer, or section without departing from the teachings of the present disclosure.

The terminology used herein is for describing particular example embodiments and is not intended to be necessarily limiting of the present disclosure. As used herein, the singular forms "a," "an" and "the" are intended to include the plural forms as well, unless the context clearly indicates otherwise. The terms "comprises," "includes" and/or "comprising," "including" when used in this specification, specify the presence of stated features, integers, steps, operations, elements, and/or components, but do not preclude the presence and/or addition of one or more other features, integers, steps, operations, elements, components, and/or groups thereof. As used herein, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. As used herein, the term "about" and/or "substantially" refers to a +/-10% variation from the nominal value/term. Such variation is always included in any given.

If any disclosures are incorporated herein by reference and such disclosures conflict in part and/or in whole with the present disclosure, then to the extent of conflict, and/or broader disclosure, and/or broader definition of terms, the present disclosure controls. If such disclosures conflict in part and/or in whole with one another, then to the extent of conflict, the later-dated disclosure controls.

The use of any and all examples, or exemplary language (e.g., "such as" or "for example") provided herein, is intended merely to better illuminate embodiments of the invention and does not pose a limitation on the scope of the invention unless otherwise claimed. No language in the specification should be construed as indicating any non-claimed element as essential to the practice of the invention.

Whereas many alterations and modifications of the present invention will no doubt become apparent to a person of ordinary skill in the art after having read the foregoing description, it is to be understood that the particular embodiments shown and described by way of illustration are in no way intended to be considered limiting.

## Claims

1. A computer-implemented method for automated discovery and transformation of application programming interfaces (APIs), the method comprising:
receiving, by one or more processors, a description of an ingress API and descriptions of a plurality of egress APIs;
applying, by the one or more processors, a natural language processing (NLP) model to compute a similarity score for each of a plurality of parameter pairs, wherein each parameter pair includes (i) a payload parameter from the description of the ingress API and (ii) a payload parameter from the description of one of the plurality of egress APIs;
constructing, by the one or more processors, a similarity matrix from the computed similarity scores for the plurality of parameter pairs;
selecting, by the one or more processors from the similarity matrix, one or more parameter pairs having a similarity score exceeding a predetermined threshold; and
generating, by the one or more processors using a generative artificial intelligence (GenAI) model, pseudo code for each selected parameter pair, the pseudo code defining transformation logic to map data between the payload parameters in the respective pair.

2. The method of claim 1, wherein each similarity score has a numerical value in a range of 0 to 1 and the predetermined threshold is greater than or equal to 0.5.

3. The method of claim 1, wherein computing the similarity score for each parameter pair comprises comparing a definition of the payload parameter from the ingress API with a definition of the payload parameter from the one of the plurality of egress APIs.

4. The method of claim 1, wherein the similarity matrix comprises an N x M matrix, where N represents a number of payload parameters from the ingress API and M represents a total number of payload parameters across the plurality of egress APIs.

5. The method of claim 1, further comprising generating, by the one or more processors, a regular expression based on the pseudo code for at least one of the selected parameter pairs.

6. The method of claim 1, wherein the pseudo code represents a one-liner conversion logic for mapping data between the payload parameters in the respective pair.

7. A system for automated discovery and transformation of application programming interfaces (APIs), the system comprising:
one or more processors; and
a non-transitory computer-readable storage medium storing instructions that, when executed by the one or more processors, cause the one or more processors to:
receive a description of an ingress API and descriptions of a plurality of egress APIs;
apply a natural language processing (NLP) model to compute a similarity score for each of a plurality of parameter pairs, wherein each parameter pair includes (i) a payload parameter from the description of the ingress API and (ii) a payload parameter from the description of one of the plurality of egress APIs;
construct a similarity matrix from the computed similarity scores for the plurality of parameter pairs;
select, from the similarity matrix, one or more parameter pairs having a similarity score exceeding a predetermined threshold; and
generate, using a generative artificial intelligence (GenAI) model, pseudo code for each selected parameter pair, the pseudo code defining transformation logic to map data between the payload parameters in the respective pair.

8. The system of claim 7, wherein each similarity score has a numerical value in a range of 0 to 1 and the predetermined threshold is greater than or equal to 0.5.

9. The system of claim 7, wherein computing the similarity score for each parameter pair comprises comparing a definition of the payload parameter from the ingress API with a definition of the payload parameter from the one of the plurality of egress APIs.

10. The system of claim 7, wherein the instructions further cause the one or more processors to, for parameter pairs having a similarity score below the predetermined threshold, enable manual processing to define transformation logic between the ingress API and the plurality of egress APIs.

11. The system of claim 7, wherein the similarity matrix comprises an N x M matrix, where N represents a number of payload parameters from the ingress API and M represents a total number of payload parameters across the plurality of egress APIs.

12. The system of claim 7, wherein the instructions further cause the one or more processors to generate a regular expression based on the pseudo code for at least one of the selected parameter pairs.

13. The system of claim 7, wherein the pseudo code represents a one-liner conversion logic for mapping data between the payload parameters in the respective pair.

14. A non-transitory computer-readable storage medium storing instructions that, when executed by one or more processors, cause the one or more processors to:
receive a description of an ingress API and descriptions of a plurality of egress APIs;
apply a natural language processing (NLP) model to compute a similarity score for each of a plurality of parameter pairs, wherein each parameter pair includes (i) a payload parameter from the description of the ingress API and (ii) a payload parameter from the description of one of the plurality of egress APIs;
construct a similarity matrix from the computed similarity scores for the plurality of parameter pairs;
select, from the similarity matrix, one or more parameter pairs having a similarity score exceeding a predetermined threshold; and
generate, using a generative artificial intelligence (GenAI) model, pseudo code for each selected parameter pair, the pseudo code defining transformation logic to map data between the payload parameters in the respective pair.

15. The non-transitory computer-readable storage medium of claim 14, wherein the instructions further cause the one or more processors to compile the pseudo code into an executable one-liner expression or a regular expression and to execute the compiled expression at runtime within an API router to transform payload data of the ingress API into payload data of at least one of the plurality of egress APIs.
